# EUROPEAN PATENT SPECIFICATION

(11) **EP 4 506 968 B1**
(45) Date of publication and mention of the grant of the patent: **11.11.2026**
(21) Application number: 24154054.1
(22) Date of filing: 26.01.2024
(51) Int. Cl.: H01C 7/04, H01C 7/00, H01C 17/065

(54) **THERMISTOR PASTE AND MANUFACTURING METHOD THEREOF**
THERMISTORPASTE UND HERSTELLUNGSVERFAHREN DAFÜR
PÂTE DE THERMISTANCE ET SON PROCÉDÉ DE FABRICATION

(30) Priority: 09.08.2023 TW 112129917
(43) Date of publication of application: 12.02.2025
(73) Proprietor: Yageo Corporation, Kaohsiung City 811 (TW)
(72) Inventor: HSIAO, Shen-Li, Kaohsiung City 815 (TW); LIN, Kuang-Cheng, Kaohsiung City 815 (TW); HUANG, Wei-Chen, Kaohsiung City 815 (TW); WANG, Ren-Hong, Kaohsiung City 815 (TW)
(74) Representative: Ström & Gulliksson AB

(56) References cited:
- EP-A1- 3 901 115
- CN-A- 1 405 798
- CN-A- 112 390 640
- CN-A- 112 489 906
- CN-A- 113 200 735
- DE-A1- 1 590 868
- JP-A- 2001 261 450
- JP-A- 2004 031 795
- US-A- 6 063 311

## Description

### BACKGROUND

### Field of Invention

The present invention relates to a thermistor paste and a manufacturing method thereof. More particularly, the present disclosure relates to a thick-film thermistor paste obtained by mixing a thermistor semi-finished product slurry, glass powder and an organic carrier.

### Description of Related Art

In the field of thermistor, a thermistor crystal can be formed by laminating or co-firing with silver electrodes. However, laminate sintering often causes problems of sintering shrinkage and lamination separation. The resulting product has an inferior mechanical structural strength, which is disadvantageous to bending or vibration of the circuit board.

Currently, a thermistor paste formed by thick film printing is known, which is formed by mixing powder, ruthenium oxide, glass powder, and a colloid, etc. However, ruthenium is a precious metal, so the production cost is high. In addition, the above thermistor paste has the problems of paste dispersion and electrical stability. CN 112 489 906 A discloses an NTC thermistor chip and a preparation method thereof. JP 2004 031795 A discloses a chip type composite part in which a thermistor and a resistance element are formed on both surfaces of a base made of an insulating material, and a method for manufacturing the same.

For the foregoing reasons, there is a need to solve the above-mentioned problems by providing a thermistor paste and a manufacturing method thereof.

### SUMMARY

The present invention provides a thermistor paste as defined by the features of claim 1 and a manufacturing method thereof as defined by the features of claim 10. The thermistor paste of the present invention is obtained by mixing the thermistor semi-finished product slurry and the glass powder and the organic carrier. The thermistor semi-finished product slurry has been sintered, so it has relatively uniform electrical properties and better electrical stability. The thermistor paste of the present invention excludes a precious metal, such as ruthenium, gold, or platinum, etc., so the production cost can be reduced. Additionally, the thermistor paste of the present invention can be applied by utilizing thick film printing to quickly produce thermal interrupter chips.

A thermistor paste is provided. Based on a total weight of the thermistor paste as 100 weight percent, the thermistor paste includes 50 to 89 weight percent of a thermistor powder, 1 to 5 weight percent of a glass powder, and 10 to 45 weight percent of an organic carrier. A main component of the thermistor powder is MnₓCo₁₋ₓNi_{y}O_{1.6}, x is from 0.4 to 1.0, and y is from 0.07 to 0.75. Based on a total weight of the organic carrier as 100 weight percent, the organic carrier includes 80 to 92 weight percent of an organic solvent, 5 to 15 weight percent of a binder, and 3 to 5 weight percent of an additive. An average grinding fineness of the thermistor paste is smaller than 20 µm.

In some embodiments, based on a total weight of the glass powder as 100 weight percent, the glass powder includes 20 to 50 weight percent of bismuth trioxide (Bi₂O₃), 10 to 30 weight percent of silicon dioxide (SiO₂), 5 to 30 weight percent of boron oxide (B₂O₃), 5 to 10 weight percent of titanium dioxide (TiO₂), 5 to 20 weight percent of aluminum oxide (Al₂O₃), 5 to 20 weight percent of zinc oxide (ZnO), and 5 to 20 weight percent of vanadium pentoxide (V₂O₅).

In some embodiments, the organic solvent is selected from the group consisting of ethylene glycol monoethyl ether acetate, ethylene glycol monobutyl ether acetate, hexanol, terpineol, benzyl alcohol, and petroleum hydrocarbon.

In some embodiments, the organic solvent excludes methanol and ethanol.

In some embodiments, the binder is selected from the group consisting of ethyl cellulose, methyl cellulose, rosin resin, polymethacrylamide, and polyvinyl butyral.

In some embodiments, the additive is selected from the group consisting of lecithin, oleic acid, stearic acid, fatty acid, erucamide, oleamide, stearamide, polyacrylamide, and N,N-ethylene bis-stearamide.

In some embodiments, the additive includes a dispersant and/or a levelling agent.

In some embodiments, a viscosity of the thermistor paste is from 5Pa·s to 300Pa·s.

In some embodiments, the viscosity of the thermistor paste is from 50Pa·s to 280Pa·s.

The present invention provides a manufacturing method of a thermistor paste including the following operations: providing a thermistor semi-finished product slurry; wherein providing the thermistor semi-finished product slurry comprises: providing a thermistor sintered material, wherein the thermistor sintered material is obtained by sintering a ball-milled mixture comprising a NTC thermistor mixture, the NTC thermistor mixture is obtained by mixing elemental powders, and the elemental powders comprise manganese tetroxide (Mn₃O₄), cobalt tetroxide (Co₃O₄), and nickel trioxide (Ni₂O₃); mixing the thermistor sintered material, terpineol, and oleamide to obtain a thermistor sintered material mixture; and ball milling the thermistor sintered material mixture to obtain the thermistor semi-finished product slurry; providing a glass powder; providing an organic carrier, in which the organic carrier includess an organic solvent, a binder, and an additive; mixing the thermistor semi-finished product slurry, the glass powder, and the organic carrier to obtain a thermistor semi-finished product slurry mixture, in which based on a total weight of the thermistor semi-finished product slurry mixture as 100 weight percent, the thermistor semi-finished product slurry mixture includes 40 to 70 weight percent of the thermistor semi-finished product slurry, 1 to 5 weight percent of the glass powder, 10 to 40 weight percent of the organic solvent, 5 to 15 weight percent of the binder, and 0.5 to 5 weight percent of the additive; using three rollers to roll the thermistor semi-finished product slurry mixture; and filtering the thermistor semi-finished product slurry mixture after using the three rollers to roll the thermistor semi-finished product slurry mixture, so as to obtain the thermistor paste, wherein the thermistor paste comprises a thermistor powder, and a main component of the thermistor powder is MnₓCo₁₋ₓNi_{y}O_{1.6}, x is from 0.4 to 1.0, and y is from 0.07 to 0.75.

In some embodiments, as mentioned above, forming the thermistor semi-finished product slurry includes the following operations: providing a thermistor sintered material; mixing the thermistor sintered material, terpineol, and oleamide to obtain a thermistor sintered material mixture, in which based on a total weight of the thermistor sintered material mixture as 100 weight percent, the thermistor sintered material mixture includes 40 to 60 weight percent of the thermistor sintered material, 40 to 55 weight percent of terpineol, and 0.5 to 5 weight percent of oleamide; and ball milling the thermistor sintered material mixture to obtain the thermistor semi-finished product slurry.

In some embodiments, the thermistor sintered material is obtained by sintering a ball-milled mixture (as mentioned above), wherein based on a total weight of the ball-milled mixture as 100 weight percent, the ball-milled mixture includes 40 to 60 weight percent of a NTC thermistor mixture, 39.5 to 55 weight percent of a mixture of 95% toluene and 5% alcohol, and 0.5 to 5 weight percent of oleic acid.

In some embodiments, as mentioned above, the NTC thermistor mixture is obtained by mixing elemental powders, and the elemental powders comprise manganese tetroxide (Mn₃O₄), cobalt tetroxide (Co₃O₄), and nickel trioxide (Ni₂O₃).

In some embodiments, the elemental powders are calcined at 600°C to 950°C for 1 to 4 hours.

In some embodiments, a sintering temperature of the thermistor paste is from 650°C to 1100°C.

### BRIEF DESCRIPTION OF THE DRAWINGS

Aspects of the present disclosure are best understood from the following detailed description when read with the accompanying figures.

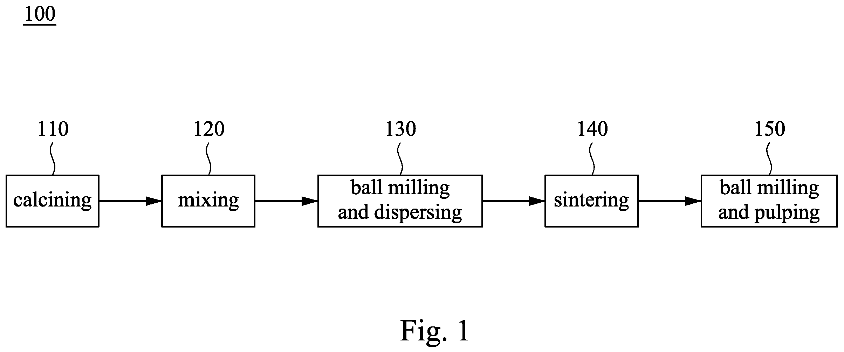

Fig. 1 depicts a flowchart of a manufacturing method of a thermistor paste according to some embodiments of the present disclosure.

### DETAILED DESCRIPTION

The making and using of the embodiments of the present invention are discussed in detail below. It should be appreciated, however, that the embodiments of the present disclosure provide many applicable inventive concepts that can be embodied in a wide variety of specific contexts. The specific embodiments discussed are merely illustrative of specific ways to make and use the disclosure, and do not limit the scope of the present invention.

In the present specification, a range represented by "one value to another value" is a summary representation that avoids enumerating all the values in the range in the specification. Therefore, the recitation of a particular numerical range covers any numerical value within the numerical range and the smaller numerical range defined by any numerical values within the numerical range, as if the arbitrary value and the smaller numerical range are expressly stated in the specification. As used herein, the term "and/or" includes any and all combinations of one or more of the associated listed items.

In addition, while the method according to the present disclosure is illustrated and described below as a series of operations or steps, it will be appreciated that the illustrated ordering of such operations or steps are not to be interpreted in a limiting sense. For example, some operations or steps may occur in different orders and/or concurrently with other steps apart from those illustrated and/or described herein. Additionally, not all illustrated operations, steps and/or features can be required to implement one or more aspects or embodiments described herein. Also, each of the operations or steps disclosed herein may include several sub-steps or actions.

The present invention provides a thermistor paste obtained by using a thermistor semi-finished product slurry (also called a negative temperature coefficient (NTC) thermistor semi-finished product slurry) and glass powder and an organic carrier. The thermistor semi-finished product slurry is obtained by using a flowchart 100 shown in Fig. 1.

Reference is made to Fig. 1. First, elemental powders are calcined at 600°C to 950°C for 1 to 4 hours, as shown in block 110. The elemental powders include manganese tetroxide (Mn₃O₄), cobalt tetroxide (Co₃O₄), and nickel trioxide (Ni₂O₃).

Then, the above elemental powders are uniformly mixed to obtain an NTC thermistor mixture, as shown in block 120. In some embodiments, based on a total weight of the NTC thermistor mixture as 100 weight percent, the NTC thermistor mixture may, for example, include 30 to 45 weight percent (wt%) of Mn₃O₄, 25 to 35 weight percent of Co₃O₄, and 30 to 43 weight percent of Ni₂O₃.

In other embodiments, in addition to the above three elemental powders, the NTC thermistor mixture may further be added with an additive. In these embodiments, based on the total weight of the NTC thermistor mixture as 100 weight percent, the NTC thermistor mixture includes 30 to 45 weight percent of Mn₃O₄, 25 to 35 weight percent of Co₃O₄, 30 to 43 weight percent of Ni₂O₃, and 0 to 5 weight percent of the additive. The additive includes ferroferric oxide (Fe₃O₄), titanium dioxide (TiO₂), zinc oxide (ZnO), and/or cupric oxide (CuO).

Next, as shown in block 130, the above NTC thermistor mixture, a mixture of 95% toluene and 5% alcohol, and oleic acid are mixed and milled at a speed of 200 to 600 rpm for 4 to 8 hours. The above NTC thermistor mixture is ball milled and dispersed (wet ball mill) to obtain a ball-milled mixture. Based on a total weight of the ball-milled mixture as 100 weight percent, the ball-milled mixture includes 40 to 60 weight percent of the NTC thermistor mixture, 39.5 to 55 weight percent of the mixture of 95% toluene and 5% alcohol, and 0.5 to 5 weight percent of oleic acid. In some embodiments, a drying temperature of the ball-milled mixture is 100°C.

Next, the above ball-milled mixture is sintered to obtain an NTC thermistor sintered material (also called a thermistor sintered material), as shown in block 140. In some embodiments, the sintering conditions are to raise the temperature to 1000°C to 1500°C within 2 to 5 hours, maintain the temperature for 1 to 3 hours, and then cool naturally to obtain the NTC thermistor sintered material. The sintering can be performed, for example, in an atmospheric environment.

After the block 140 is performed, the above NTC thermistor sintered material, terpineol, and oleamide are mixed to obtain an NTC thermistor sintered material mixture (also called a thermistor sintered material mixture), as shown in block 150. A horizontal ball miller is thereafter used to mill at a speed of 800 to 1200 rpm for 3 to 5 hours to ball mill and pulp the NTC thermistor sintered material mixture so as to obtain an NTC thermistor semi-finished product slurry (also called a thermistor semi-finished product slurry). Based on a total weight of the NTC thermistor sintered material mixture as 100 weight percent, the NTC thermistor sintered material mixture includes 40 to 60 weight percent of the thermistor sintered material, 40 to 55 weight percent of terpineol, and 0.5 to 5 weight percent of oleamide.

In some embodiments, the operation of ball milling and pulping includes adding zirconia beads, silicon carbide (SiC), silicon dioxide (SiO₂), or aluminum oxide (Al₂O₃). In some embodiments, a diameter of each of the zirconia beads is 0.5 mm. In some embodiments, an average particle size D50 of the NTC thermistor semi-finished product slurry is from 0.3 µm to 0.9 µm.

After the above NTC thermistor semi-finished product slurry is obtained, the NTC thermistor semi-finished product slurry, the glass powder, and the organic carrier are mixed to obtain an NTC thermistor semi-finished product slurry mixture (also called a thermistor semi-finished product slurry mixture). The organic carrier includes an organic solvent, a binder, and an additive. Based on a total weight of the NTC thermistor semi-finished product slurry mixture as 100 weight percent, the NTC thermistor semi-finished product slurry mixture includes 40 to 70 weight percent of the NTC thermistor semi-finished product slurry, 1 to 5 weight percent of the glass powder, 10 to 40 weight percent of the organic solvent, 5 to 15 weight percent of the binder, and 0.5 to 5 weight percent of the additive. It should be noted that all of the above glass powder, organic solvent, binder, and additive in the NTC thermistor semi-finished product slurry mixture can be added to the NTC thermistor semi-finished product slurry at once or in batches.

The addition of the glass powder can reduce a sintering temperature of subsequent sintering, which is advantageous to reducing the production cost. In some embodiments, the NTC thermistor semi-finished product slurry mixture is stirred and mixed by using a planetary mixer.

After the NTC thermistor semi-finished product slurry mixture is obtained, three rollers are used to roll the NTC thermistor semi-finished product slurry mixture. Next, the NTC thermistor semi-finished product slurry mixture is filtered to obtain an NTC thermistor paste (also called the thermistor paste) of the present invention. In some embodiments, after filtering the above NTC thermistor semi-finished product slurry mixture through a 150 mesh sieve, an average grinding fineness of the obtained thermistor paste is smaller than 20 µm. In some embodiments, a sintering temperature of the NTC thermistor paste is from 650°C to 1100°C, such as below 850°C. In some embodiments, the NTC thermistor paste can be co-fired with a silver paste in an atmosphere of 850°C.

The present invention provides the NTC thermistor paste. Based on a total weight of the NTC thermistor paste as 100 weight percent, the NTC thermistor paste includes 50 to 89 weight percent of a NTC thermistor powder (also called a thermistor powder), 1 to 5 weight percent of the glass powder, and 10 to 45 weight percent of the organic solvent. A main component of the NTC thermistor powder is MnₓCo₁₋ₓNi_{y}O_{1.6}, wherein x is from 0.4 to 1.0 and y is from 0.07 to 0.75. The NTC thermistor powder further includes trace amount(s) of metal oxide(s), such as an iron oxide, a zinc oxide, a titanium oxide, a copper oxide and/or some other metal oxide.

If the content of the NTC thermistor powder was less than 50 weight percent, the electrical properties (such as a resistance value, a reactivity to temperature) of the resulted thermistor element would not meet expectations. If the content of the NTC thermistor powder was greater than 89 weight percent, it would be difficult to increase the viscosity of the paste due to the excessive solid powder, which would be disadvantageous to the subsequent processing. If the content of the glass powder was less than 1 weight percent, the bonding degree between the resulted thermistor paste and the substrate would be poor, thereby making the subsequent processing tend to peel easily. If the content of the glass powder was greater than 5 weight percent, the electrical properties (such as the resistance value, the reactivity to temperature) of the resulted thermistor element would not meet expectations. If the content of the organic carrier was less than 10 weight percent, it would be difficult to increase the viscosity of the paste due to the excessive solid powder, which would be disadvantageous to the subsequent processing. If the content of the organic carrier was greater than 45 weight percent, it would be difficult to control the rheological properties of the thermistor paste, which would be disadvantageous to the subsequent processing.

In some embodiments, based on a total weight of the glass powder as 100 weight percent, the glass powder includes 20 to 50 weight percent of bismuth trioxide (Bi₂O₃), 10 to 30 weight percent of silicon dioxide (SiO₂), 5 to 30 weight percent of boron oxide (B₂O₃), 5 to 10 weight percent of titanium dioxide (TiO₂), 5 to 20 weight percent of aluminum oxide (Al₂O₃), 5 to 20 weight percent of zinc oxide (ZnO), and 5 to 20 weight percent of vanadium pentoxide (V₂O₅).

Based on a total weight of the organic carrier as 100 weight percent, the organic carrier includes 80 to 92 weight percent of the organic solvent, 5 to 15 weight percent of the binder, and 3 to 5 weight percent of the additive.

If the content of the organic solvent was less than 80 weight percent, the wettability of the organic solvent to the solid powder would be insufficient, or the organic branch chains in the binder or additive could not be smoothly moistened, and both of which would result in insufficient dispersion stability of the paste. If the content of the organic solvent was greater than 92 weight percent, the solid powder of the paste would not be completely dispersed or coated, thus would result in poor dispersibility of the paste. If the content of the binder was less than 5 weight percent, the viscosity of the paste would be insufficient, which would be disadvantageous to the subsequent processing. If the content of the binder was greater than 15 weight percent, the viscosity of the paste would be excessively high, which would be also disadvantageous to the subsequent processing. If the content of the additive was less than 3 weight percent, some abnormalities or difficulties would be caused during processing of the paste, such as poor storage dispersibility, bubbles would be generated during processing, or the inability to print or coat smoothly on the substrate, etc. If the content of the additive was greater than 5 weight percent, the organic branch chains in the additive were easily entangled with each other, and the viscosity of the paste would be too thick to subsequent processing.

In some embodiments, the organic solvent includes an ester solvent, an alcohol solvent, an aromatic hydrocarbon solvent, and/or a petroleum hydrocarbon. In some embodiments, the organic solvent is selected from the group consisting of ethylene glycol monoethyl ether acetate, ethylene glycol monobutyl ether acetate, hexanol, terpineol, benzyl alcohol, and petroleum hydrocarbon. In some embodiments, the organic solvent excludes methanol and ethanol. Since the NTC thermistor paste of the present disclosure excludes methanol and ethanol, it is advantageous to long-term storage and it does not tend to have problems such as deterioration or precipitation, etc.

In some embodiments, the binder is selected from the group consisting of ethyl cellulose, methyl cellulose, rosin resin, polymethacrylamide, and polyvinyl butyral. In some embodiments, a viscosity of the NTC thermistor paste is from 5Pa·s to 300Pa·s, for example, from 50Pa·s to 280Pa·s.

In some embodiments, the additive includes a dispersant and/or a levelling agent. In some embodiments, the additive is selected from the group consisting of lecithin, oleic acid, stearic acid, fatty acid, erucamide, oleamide, stearamide, polyacrylamide, and N,N-ethylene bis-stearamide. The addition of the additive helps increase the storage stability of NTC thermistor paste, reduce the surface tension of NTC thermistor paste, and increase the dispersion of NTC thermistor paste.

In some embodiments, a temperature coefficient of resistance of the NTC thermistor paste is from 3900ppm/°C to 4600ppm/°C, such as 4000 ppm/°C, 4200 ppm/°C, 4400ppm/°C. In some embodiments, a resistivity of the NTC thermistor paste is less than 40Ω·m, such as 1Ω·m, 10Ω·m, 20Ω·m, 25Ω·m, 30Ω·m, or 35Ω·m. In some embodiments, the NTC thermistor paste can be applied to a screen printing process, a stencil printing process, or a printing coating process.

The present invention provides a thermistor paste and a manufacturing method thereof. The thermistor paste of the present invention is obtained by mixing the thermistor semi-finished product slurry and the glass powder and the organic carrier. The thermistor semi-finished product slurry has been sintered, so it has relatively uniform electrical properties and better electrical stability. The thermistor paste of the present invention excludes a precious metal, such as ruthenium, gold, or platinum, etc., so the production cost can be reduced. Additionally, the thermistor paste of the present invention can be applied by utilizing thick film printing to quickly produce thermistor chips.

## Claims

1. A thermistor paste, based on a total weight of the thermistor paste as 100 weight percent, **characterized by** comprising:
50 to 89 weight percent of a thermistor powder, wherein a main component of the thermistor powder is MnₓCo₁₋ₓNi_{y}O_{1.6}, x is from 0.4 to 1.0, and y is from 0.07 to 0.75;
1 to 5 weight percent of a glass powder; and
10 to 45 weight percent of an organic carrier, wherein based on a total weight of the organic carrier as 100 weight percent, the organic carrier comprises:
80 to 92 weight percent of an organic solvent;
5 to 15 weight percent of a binder; and
3 to 5 weight percent of an additive;
wherein an average grinding fineness of the thermistor paste is smaller than 20 µm.

2. The thermistor paste of claim 1, wherein based on a total weight of the glass powder as 100 weight percent, the glass powder comprises:
20 to 50 weight percent of bismuth trioxide (Bi₂O₃);
10 to 30 weight percent of silicon dioxide (SiO₂);
5 to 30 weight percent of boron oxide (B₂O₃);
5 to 10 weight percent of titanium dioxide (TiO₂);
5 to 20 weight percent of aluminum oxide (Al₂O₃);
5 to 20 weight percent of zinc oxide (ZnO); and
5 to 20 weight percent of vanadium pentoxide (V₂O₅).

3. The thermistor paste of any one of claims 1-2, wherein the organic solvent is selected from the group consisting of ethylene glycol monoethyl ether acetate, ethylene glycol monobutyl ether acetate, hexanol, terpineol, benzyl alcohol, and petroleum hydrocarbon.

4. The thermistor paste of any one of claims 1-2, wherein the organic solvent excludes methanol and ethanol.

5. The thermistor paste of any one of claims 1-4, wherein the binder is selected from the group consisting of ethyl cellulose, methyl cellulose, rosin resin, polymethacrylamide, and polyvinyl butyral.

6. The thermistor paste of any one of claims 1-5, wherein the additive is selected from the group consisting of lecithin, oleic acid, stearic acid, fatty acid, erucamide, oleamide, stearamide, polyacrylamide, and N,N-ethylene bis-stearamide.

7. The thermistor paste of any one of claims 1-5, wherein the additive comprises a dispersant and/or a levelling agent.

8. The thermistor paste of any one of claims 1-7, wherein a viscosity of the thermistor paste is from 5Pa·s to 300Pa·s.

9. The thermistor paste of claim 8, wherein the viscosity of the thermistor paste is from 50Pa·s to 280Pa·s.

10. A manufacturing method of a thermistor paste **characterized by** comprising:
providing a thermistor semi-finished product slurry, wherein providing the thermistor semi-finished product slurry comprises:
providing a thermistor sintered material, wherein the thermistor sintered material is obtained by sintering a ball-milled mixture comprising a NTC thermistor mixture, the NTC thermistor mixture is obtained by mixing elemental powders, and the elemental powders comprise manganese tetroxide (Mn₃O₄), cobalt tetroxide (Co₃O₄), and nickel trioxide (Ni₂O₃);
mixing the thermistor sintered material, terpineol, and oleamide to obtain a thermistor sintered material mixture; and
ball milling the thermistor sintered material mixture to obtain the thermistor semi-finished product slurry;
providing glass powder;
providing an organic carrier, wherein the organic carrier comprises an organic solvent, a binder, and an additive;
mixing the thermistor semi-finished product slurry, the glass powder, and the organic carrier to obtain a thermistor semi-finished product slurry mixture, wherein based on a total weight of the thermistor semi-finished product slurry mixture as 100 weight percent, the thermistor semi-finished product slurry mixture comprises:
40 to 70 weight percent of the thermistor semi-finished product slurry;
1 to 5 weight percent of the glass powder;
10 to 40 weight percent of the organic solvent;
5 to 15 weight percent of the binder; and
0.5 to 5 weight percent of the additive;
using three rollers to roll the thermistor semi-finished product slurry mixture; and
filtering the thermistor semi-finished product slurry mixture after using the three rollers to roll the thermistor semi-finished product slurry mixture to obtain the thermistor paste, wherein the thermistor paste comprises a thermistor powder, and a main component of the thermistor powder is MnₓCo₁₋ₓNi_{y}O_{1.6}, x is from 0.4 to 1.0, and y is from 0.07 to 0.75.

11. The manufacturing method of the thermistor paste of claim 10, wherein based on a total weight of the thermistor sintered material mixture as 100 weight percent, the thermistor sintered material mixture comprises 40 to 60 weight percent of the thermistor sintered material, 40 to 55 weight percent of terpineol, and 0.5 to 5 weight percent of oleamide.

12. The manufacturing method of the thermistor paste of claim 10, wherein based on a total weight of the ball-milled mixture as 100 weight percent, the ball-milled mixture comprises 40 to 60 weight percent of the NTC thermistor mixture, 39.5 to 55 weight percent of a mixture of 95% toluene and 5% alcohol, and 0.5 to 5 weight percent of oleic acid.

13. The manufacturing method of the thermistor paste of claim 10, wherein the elemental powders are calcined at 600°C to 950°C for 1 to 4 hours.

14. The manufacturing method of the thermistor paste of any one of claims 10-13, wherein a sintering temperature of the thermistor paste is from 650°C to 1100°C.

## Patentansprüche

1. Thermistorpaste, bezogen auf ein Gesamtgewicht der Thermistorpaste als 100 Gewichtsprozent, **dadurch gekennzeichnet, dass** sie umfasst:
50 bis 89 Gewichtsprozent eines Thermistorpulvers, wobei ein Hauptbestandteil des Thermistorpulvers MnₓCo₁₋ₓNi_{y}O_{1,6} ist, x von 0,4 bis 1,0 beträgt und y von 0,07 bis 0,75 beträgt;
1 bis 5 Gewichtsprozent eines Glaspulvers; und
10 bis 45 Gewichtsprozent eines organischen Trägers, wobei, bezogen auf ein Gesamtgewicht des organischen Trägers als 100 Gewichtsprozent, der organische Träger umfasst:
80 bis 92 Gewichtsprozent eines organischen Lösungsmittels;
5 bis 15 Gewichtsprozent eines Bindemittels; und
3 bis 5 Gewichtsprozent eines Additivs;
wobei eine mittlere Mahlfeinheit der Thermistorpaste kleiner als 20 µm ist.

2. Thermistorpaste nach Anspruch 1, wobei, bezogen auf ein Gesamtgewicht des Glaspulvers als 100 Gewichtsprozent, das Glaspulver umfasst:
20 bis 50 Gewichtsprozent Wismuttrioxid (Bi₂O₃);
10 bis 30 Gewichtsprozent Siliziumdioxid (SiO₂);
5 bis 30 Gewichtsprozent Boroxid (B₂O₃);
5 bis 10 Gewichtsprozent Titandioxid (TiO₂);
5 bis 20 Gewichtsprozent Aluminiumoxid (Al₂O₃);
5 bis 20 Gewichtsprozent Zinkoxid (ZnO); und
5 bis 20 Gewichtsprozent Vanadiumpentoxid (V₂O₅).

3. Thermistorpaste nach einem der Ansprüche 1-2, wobei das organische Lösungsmittel ausgewählt ist aus der Gruppe bestehend aus Ethylenglykolmonoethyletheracetat, Ethylenglykolmonobutyletheracetat, Hexanol, Terpineol, Benzylalkohol und Erdölkohlenwasserstoff.

4. Thermistorpaste nach einem der Ansprüche 1-2, wobei das organische Lösungsmittel Methanol und Ethanol ausschließt.

5. Thermistorpaste nach einem der Ansprüche 1-4, wobei das Bindemittel ausgewählt ist aus der Gruppe bestehend aus Ethylcellulose, Methylcellulose, Kolophoniumharz, Polymethacrylamid und Polyvinylbutyral.

6. Thermistorpaste nach einem der Ansprüche 1-5, wobei das Additiv ausgewählt ist aus der Gruppe bestehend aus Lecithin, Ölsäure, Stearinsäure, Fettsäure, Erucamid, Oleamid, Stearamid, Polyacrylamid und N,N'-Ethylen-bis-stearamid.

7. Thermistorpaste nach einem der Ansprüche 1-5, wobei das Additiv ein Dispergiermittel und/oder ein Verlaufsmittel umfasst.

8. Thermistorpaste nach einem der Ansprüche 1-7, wobei eine Viskosität der Thermistorpaste von 5 Pa·s bis 300 Pa·s beträgt.

9. Thermistorpaste nach Anspruch 8, wobei die Viskosität der Thermistorpaste von 50 Pa·s bis 280 Pa·s beträgt.

10. Herstellungsverfahren für eine Thermistorpaste, **dadurch gekennzeichnet, dass** es umfasst:
Bereitstellen einer Thermistor-Halbzeugaufschlämmung, wobei das Bereitstellen der Thermistor-Halbzeugaufschlämmung umfasst:
Bereitstellen eines Thermistor-Sintermaterials, wobei das Thermistor-Sintermaterial durch Sintern einer kugelgemahlenen Mischung erhalten wird, die eine NTC-Thermistormischung umfasst, wobei die NTC-Thermistormischung durch Mischen von Elementarpulvern erhalten wird und die Elementarpulver Mangantetroxid (Mn₃O₄), Kobalttetroxid (Co₃O₄) und Nickeltrioxid (Ni₂O₃) umfassen;
Mischen des Thermistor-Sintermaterials, von Terpineol und von Oleamid, um eine Thermistor-Sintermaterialmischung zu erhalten; und
Kugelmahlen der Thermistor-Sintermaterialmischung, um die Thermistor-Halbzeugaufschlämmung zu erhalten;
Bereitstellen von Glaspulver;
Bereitstellen eines organischen Trägers, wobei der organische Träger ein organisches Lösungsmittel, ein Bindemittel und ein Additiv umfasst;
Mischen der Thermistor-Halbzeugaufschlämmung, des Glaspulvers und des organischen Trägers, um eine Thermistor-Halbzeugaufschlämmungsmischung zu erhalten, wobei, bezogen auf ein Gesamtgewicht der Thermistor-Halbzeugaufschlämmungsmischung als 100 Gewichtsprozent, die Thermistor-Halbzeugaufschlämmungsmischung umfasst:
40 bis 70 Gewichtsprozent der Thermistor-Halbzeugaufschlämmung;
1 bis 5 Gewichtsprozent des Glaspulvers;
10 bis 40 Gewichtsprozent des organischen Lösungsmittels;
5 bis 15 Gewichtsprozent des Bindemittels; und
0,5 bis 5 Gewichtsprozent des Additivs;
Verwenden eines Dreiwalzenstuhls zum Walzen der Thermistor-Halbzeugaufschlämmungsmischung; und
Filtrieren der Thermistor-Halbzeugaufschlämmungsmischung nach dem Verwenden des Dreiwalzenstuhls zum Walzen der Thermistor-Halbzeugaufschlämmungsmischung, um die Thermistorpaste zu erhalten, wobei die Thermistorpaste ein Thermistorpulver umfasst und ein Hauptbestandteil des Thermistorpulvers MnₓCo₁₋ₓNi_{y}O_{1,6} ist, x von 0,4 bis 1,0 beträgt und y von 0,07 bis 0,75 beträgt.

11. Herstellungsverfahren für die Thermistorpaste nach Anspruch 10, wobei, bezogen auf ein Gesamtgewicht der Thermistor-Sintermaterialmischung als 100 Gewichtsprozent, die Thermistor-Sintermaterialmischung 40 bis 60 Gewichtsprozent des Thermistor-Sintermaterials, 40 bis 55 Gewichtsprozent Terpineol und 0,5 bis 5 Gewichtsprozent Oleamid umfasst.

12. Herstellungsverfahren für die Thermistorpaste nach Anspruch 10, wobei, bezogen auf ein Gesamtgewicht der kugelgemahlenen Mischung als 100 Gewichtsprozent, die kugelgemahlene Mischung 40 bis 60 Gewichtsprozent der NTC-Thermistormischung, 39,5 bis 55 Gewichtsprozent einer Mischung aus 95 % Toluol und 5 % Alkohol sowie 0,5 bis 5 Gewichtsprozent Ölsäure umfasst.

13. Herstellungsverfahren für die Thermistorpaste nach Anspruch 10, wobei die Elementarpulver bei 600 °C bis 950 °C für 1 bis 4 Stunden calciniert werden.

14. Herstellungsverfahren für die Thermistorpaste nach einem der Ansprüche 10-13, wobei eine Sintertemperatur der Thermistorpaste von 650 °C bis 1100 °C beträgt.

## Revendications

1. Pâte pour thermistance, rapportée à un poids total de la pâte pour thermistance comptant pour 100 pour cent en poids, **caractérisée en ce qu'**elle comprend:
50 à 89 pour cent en poids d'une poudre pour thermistance, dans laquelle un composant principal de la poudre pour thermistance est MnₓCo₁₋ₓNi_{y}O_{1,6}, x étant compris entre 0,4 et 1,0, et y étant compris entre 0,07 et 0,75 ;
1 à 5 pour cent en poids d'une poudre de verre; et
10 à 45 pour cent en poids d'un véhicule organique, dans lequel, rapporté à un poids total du véhicule organique comptant pour 100 pour cent en poids, le véhicule organique comprend:
80 à 92 pour cent en poids d'un solvant organique;
5 à 15 pour cent en poids d'un liant; et
3 à 5 pour cent en poids d'un additif;
dans laquelle une finesse de broyage moyenne de la pâte pour thermistance est inférieure à 20 µm.

2. Pâte pour thermistance selon la revendication 1, dans laquelle, rapportée à un poids total de la poudre de verre comptant pour 100 pour cent en poids, la poudre de verre comprend :
20 à 50 pour cent en poids de trioxyde de bismuth (Bi₂O₃);
10 à 30 pour cent en poids de dioxyde de silicium (SiO₂);
5 à 30 pour cent en poids d'oxyde de bore (B₂O₃);
5 à 10 pour cent en poids de dioxyde de titane (TiO₂);
5 à 20 pour cent en poids d'oxyde d'aluminium (Al₂O₃);
5 à 20 pour cent en poids d'oxyde de zinc (ZnO); et
5 à 20 pour cent en poids de pentoxyde de vanadium (V₂O₅).

3. Pâte pour thermistance selon l'une quelconque des revendications 1 et 2, dans laquelle le solvant organique est choisi dans le groupe constitué par l'acétate d'éther monoéthylique d'éthylène glycol, l'acétate d'éther monobutylique d'éthylène glycol, l'hexanol, le terpinéol, l'alcool benzylique et un hydrocarbure de pétrole.

4. Pâte pour thermistance selon l'une quelconque des revendications 1 et 2, dans laquelle le solvant organique exclut le méthanol et l'éthanol.

5. Pâte pour thermistance selon l'une quelconque des revendications 1 à 4, dans laquelle le liant est choisi dans le groupe constitué par l'éthylcellulose, la méthylcellulose, la résine de colophane, le polyméthacrylamide et le polyvinylbutyral.

6. Pâte pour thermistance selon l'une quelconque des revendications 1 à 5, dans laquelle l'additif est choisi dans le groupe constitué par la lécithine, l'acide oléique, l'acide stéarique, un acide gras, l'érucamide, l'oléamide, le stéaramide, le polyacrylamide et le N,N'-éthylène-bis-stéaramide.

7. Pâte pour thermistance selon l'une quelconque des revendications 1 à 5, dans laquelle l'additif comprend un dispersant et/ou un agent nivelant.

8. Pâte pour thermistance selon l'une quelconque des revendications 1 à 7, dans laquelle une viscosité de la pâte pour thermistance est de 5 Pa·s à 300 Pa·s.

9. Pâte pour thermistance selon la revendication 8, dans laquelle la viscosité de la pâte pour thermistance est de 50 Pa·s à 280 Pa·s.

10. Procédé de fabrication d'une pâte pour thermistance, **caractérisé en ce qu'**il comprend:
la fourniture d'une suspension de produit semi-fini pour thermistance, dans lequel la fourniture de la suspension de produit semi-fini pour thermistance comprend:
la fourniture d'un matériau fritté pour thermistance, dans lequel le matériau fritté pour thermistance est obtenu par frittage d'un mélange broyé au broyeur à boulets comprenant un mélange pour thermistance CTN, le mélange pour thermistance CTN étant obtenu par mélange de poudres élémentaires, et les poudres élémentaires comprenant du tétroxyde de manganèse (Mn₃O₄), du tétroxyde de cobalt (Co₃O₄) et du trioxyde de nickel (Ni₂O₃);
le mélange du matériau fritté pour thermistance, de terpinéol et d'oléamide pour obtenir un mélange de matériau fritté pour thermistance ; et
le broyage au broyeur à boulets du mélange de matériau fritté pour thermistance afin d'obtenir la suspension de produit semi-fini pour thermistance;
la fourniture d'une poudre de verre;
la fourniture d'un véhicule organique, dans lequel le véhicule organique comprend un solvant organique, un liant et un additif;
le mélange de la suspension de produit semi-fini pour thermistance, de la poudre de verre et du véhicule organique pour obtenir un mélange de suspension de produit semi-fini pour thermistance, dans lequel, rapporté à un poids total du mélange de suspension de produit semi-fini pour thermistance comptant pour 100 pour cent en poids, le mélange de suspension de produit semi-fini pour thermistance comprend:
40 à 70 pour cent en poids de la suspension de produit semi-fini pour thermistance;
1 à 5 pour cent en poids de la poudre de verre;
10 à 40 pour cent en poids du solvant organique;
5 à 15 pour cent en poids du liant; et
0,5 à 5 pour cent en poids de l'additif;
l'utilisation d'un broyeur à trois rouleaux pour laminer le mélange de suspension de produit semi-fini pour thermistance; et
la filtration du mélange de suspension de produit semi-fini pour thermistance après l'utilisation du broyeur à trois rouleaux pour laminer le mélange de suspension de produit semi-fini pour thermistance afin d'obtenir la pâte pour thermistance, dans lequel la pâte pour thermistance comprend une poudre pour thermistance, et un composant principal de la poudre pour thermistance est MnₓCo₁₋ₓNi_{y}O_{1,6}, x étant compris entre 0,4 et 1,0, et y étant compris entre 0,07 et 0,75.

11. Procédé de fabrication de la pâte pour thermistance selon la revendication 10, dans lequel, rapporté à un poids total du mélange de matériau fritté pour thermistance comptant pour 100 pour cent en poids, le mélange de matériau fritté pour thermistance comprend 40 à 60 pour cent en poids du matériau fritté pour thermistance, 40 à 55 pour cent en poids de terpinéol et 0,5 à 5 pour cent en poids d'oléamide.

12. Procédé de fabrication de la pâte pour thermistance selon la revendication 10, dans lequel, rapporté à un poids total du mélange broyé au broyeur à boulets comptant pour 100 pour cent en poids, le mélange broyé au broyeur à boulets comprend 40 à 60 pour cent en poids du mélange pour thermistance CTN, 39,5 à 55 pour cent en poids d'un mélange de 95 % de toluène et 5 % d'alcool, et 0,5 à 5 pour cent en poids d'acide oléique.

13. Procédé de fabrication de la pâte pour thermistance selon la revendication 10, dans lequel les poudres élémentaires sont calcinées entre 600 °C et 950 °C pendant 1 à 4 heures.

14. Procédé de fabrication de la pâte pour thermistance selon l'une quelconque des revendications 10 à 13, dans lequel une température de frittage de la pâte pour thermistance est comprise entre 650 °C et 1100 °C.
